# FASCICULE DE BREVET EUROPEEN

(11) **EP 3 411 246 B1**
(45) Date de publication et mention de la délivrance du brevet: **03.06.2020**
(21) Numéro de dépôt: 17707617.1
(22) Date de dépôt: 02.02.2017
(51) Int. Cl.: B43K 19/00, C09D 13/00

(54) **CRAIE DE COLORIAGE A BASE DE CIRE A EFFET AQUARELLE**
FARBKREIDE AUF WACHSBASIS MIT WASSERFARBEFFEKT
WAX-BASED COLOURING CRAYON WITH A WATERCOLOUR EFFECT

(30) Priorité: 05.02.2016 FR 1650957
(43) Date de publication de la demande: 12.12.2018
(73) Titulaire: Société BIC, 92110 Clichy (FR)
(72) Inventeur: GOUEREC, Julien, 62220 Boulogne-Sur-Mer (FR); DANEL, Alice, 62720 Rinxent (FR); LEFEBVRE, Philippe, 62930 Wimereux (FR)
(74) Mandataire: Cabinet Beau de Loménie
(86) Numéro de dépôt international: PCT/FR2017/050230
(87) Numéro de publication internationale: WO 2017/134389

(56) Documents cités:
- EP-A1- 0 434 163
- RO-A2- 95 221
- RO-A2- 96 376
- SU-A1- 960 214

## Description

La présente invention concerne les craies de coloriage à base de cire destinées aux surfaces poreuses ou non poreuses.

Les craies de coloriage à base de cire sont déjà connues de l'art antérieur. Ces craies aussi dénommées craies grasses, craies de cire ou crayons de cire sont à différencier des craies calcinées destinées à écrire sur un tableau noir, en raison de la présence de matière grasse, en particulier en forte proportion, par exemple sous forme de cire. Cette matière grasse sert de base à la craie et lors de sa fabrication est fondue avant incorporation des autres ingrédients. Ces craies à base de cire sont en général destinées à être utilisées sur du papier pour le coloriage. Elles ne sont toutefois pas destinées à être utilisées en tant que mine dans des crayons de couleur car elles ont des propriétés mécaniques suffisantes pour être utilisées seules, sans nécessiter la présence d'une gaine, et donc sans se casser lors de leur utilisation. Ces craies ne sont également pas en général destinées à une utilisation sur la peau, même si elles ne sont pas toxiques. Le problème rencontré par ces craies est qu'elles ne sont destinées à être utilisées que sur un seul type de support, les surfaces poreuses comme le papier, et qu'elles sont difficiles à effacer, en particulier sur la peau ou les vêtements, en raison de la présence de cire dans le matériau qui laisse un résidu après lavage. Sur les surfaces non poreuses elles sont également difficilement effaçables, en particulier à sec.

Or les inventeurs se sont aperçus qu'en remplaçant une partie de la cire par un alcool gras éthoxylé, il était possible d'obtenir une craie de coloriage à base de cire pouvant être utilisée sur des surfaces non poreuses, qui soit lavable à l'eau et effaçable à sec sur de telles surfaces et présentant un effet aquarelle sur des surfaces poreuses comme le papier. En outre le nettoyage de ces craies sur la peau est facile, de même que les vêtements tachés par cette cire présentent une bonne lavabilité.

Il est connu d'après la demande EP0434163 d'utiliser un alcool gras éthoxylé dans des craies lavables à l'eau. Toutefois ces craies ne sont pas des craies à base de cires car le but de cette demande est d'obtenir une craie ne comportant que peu d'ingrédients et donc contenant essentiellement de l'alcool gras éthoxylé et des agents colorants. En outre de telles craies présentent les inconvénients suivants :
- Elles sont trop collantes sur le papier, trop grasses et manquent de glissant ;
- Elles forment un dépôt hétérogène en épaisseur car la craie a tendance à s'écraser sur le papier ;
- Elles présentent une faible résistance mécanique (rupture) et aux chocs ;
- Elles tâchent fortement les mains (même si elles sont lavables à l'eau facilement) ;
- Elles présentent une difficulté de mise en œuvre de leur procédé de préparation: manque de retrait et donc difficulté de démoulage et temps de refroidissement trop long.

La présente invention concerne donc une craie de coloriage à base de cire pour surface poreuse et non poreuse comprenant :
a- au moins une cire,
b- un alcool gras éthoxylé,
c- de la stéarine,
d- une charge,
e- au moins un pigment et
f- éventuellement un additif.

La composition de la craie de coloriage à base de cire selon la présente invention comprend donc une cire a) qui constitue la matrice de la craie et assure sa structure et ses propriétés mécaniques.

Avantageusement, la cire a) est une cire naturelle (végétale, animale ou d'insecte) ou synthétique ou un mélange de ces cires. La cire est en particulier choisi parmi la paraffine, la cire microcristalline, la cire d'abeille, la cire de polyéthylène, le pentaérythritol stéarate et leurs mélanges, plus avantageusement parmi la paraffine, la cire microcristalline, la cire d'abeille et leurs mélanges, encore plus avantageusement parmi un mélange de paraffine et de cire microcristalline et un mélange de cire d'abeille et de cire microcristalline.

Dans un mode de réalisation avantageux, la teneur en cire a) de la craie coloriage à base de de cire selon la présente invention est comprise entre 5 et 75 % en poids, avantageusement entre 10 et 50 % en poids, encore plus avantageusement entre 15 et 35 % en poids, en particulier entre 20 et 30% en poids, par rapport au poids total de la craie.

Lorsque la cire a) comprend de la cire microcristalline, la teneur en cire microcristalline de la craie selon l'invention est comprise entre 5 et 25% en poids, en particulier entre 6 et 15% en poids, plus avantageusement entre 7 et 14% en poids, par rapport au poids total de la craie.

Lorsque la cire a) comprend de la paraffine, la teneur en paraffine de la craie selon l'invention est comprise entre 5 et 40% en poids, en particulier entre 10 et 25% en poids, plus avantageusement entre 11 et 20% en poids, par rapport au poids total de la craie.

Lorsque la cire a) comprend de la cire d'abeille, la teneur en cire d'abeille de la craie selon l'invention est comprise entre 5 et 40% en poids, en particulier entre 10 et 25% en poids, plus avantageusement entre 11 et 15% en poids, par rapport au poids total de la craie.

La composition de la craie de coloriage à base de cire selon la présente invention comprend en outre un alcool gras éthoxylé b). L'alcool gras éthoxylé permet d'apporter la propriété d'hydrosolubilité à la craie selon l'invention tout en gardant une bonne affinité avec la cire a). Avantageusement l'alcool gras éthoxylé est un alcool gras en C₁₂₋₂₂, en particulier en C₁₆₋₁₈. Plus avantageusement l'alcool gras éthoxylé b) est choisi parmi les alcools cétyliques éthoxylés, les alcools stéaryliques éthoxylés, les alcools cétylique et stéarylique éthoxylés et leurs mélanges, encore plus avantageusement il s'agit d'un alcool cétylique et stéarylique éthoxylé de formule I suivante :

CHᵣ(CH₂)ₘ-(O-CHᵣCH₂)ₙ-OH

dans laquelle m = 15 ou 17 et n représente un nombre entier compris entre 2 et 100, avantageusement entre 24 et 51, plus avantageusement entre 24 et 30.

En particulier l'alcool gras éthoxylé est du cétéareth 25 ou du cétéareth 50 par exemple commercialisé par la société Lamberti sous la dénomination ROLFOR HT/25 ou ROLFOR HT/50, en particulier du cétéareth 25 par exemple commercialisé par la société Lamberti sous la dénomination ROLFOR HT/25.

Dans un mode de réalisation avantageux, la teneur en alcool gras éthoxylé b) de la craie selon l'invention est comprise entre 20 et 70 % en poids, avantageusement entre 25 et 50 % en poids, encore plus avantageusement entre 25 et 45 % en poids, par rapport au poids total de la craie.

La composition de la craie de coloriage à base de cire selon la présente invention comprend de plus de la stéarine c) qui a pour but de donner du glissant à la craie selon la présente invention.

Dans un mode de réalisation avantageux, la teneur en stéarine c) de la craie selon l'invention est comprise entre 10 et 40 % en poids, avantageusement entre 15 et 30 % en poids, encore plus avantageusement entre 17 et 25 % en poids, par rapport au poids total de la craie.

La composition de la craie de coloriage à base de cire selon la présente invention comprend par ailleurs une charge de dilution d). Avantageusement, la charge d) est choisie dans le groupe constitué par une argile, du kaolin, de la Montmorillonite, de la bentonite, de la silice, du mica, du talc, du carbonate de calcium, du silicate de magnésium, du silicate d'aluminium et leurs mélanges avantageusement il s'agit du kaolin. En particulier, le kaolin utilisable selon l'invention comprend au moins 99% de particules ayant un diamètre inférieur à 40 µm, avantageusement au moins 97% de particules ayant un diamètre inférieur à 20 µm, plus avantageusement au moins 86% de particules ayant un diamètre inférieur à 10 µm, encore plus avantageusement au moins 67% de particules ayant un diamètre inférieur à 5 µm, bien plus avantageusement au moins 40% de particules ayant un diamètre inférieur à 2 µm, mesurées à l'aide d'un sédigraphe par sédimentation et rayons X. Plus particulièrement, le kaolin selon l'invention a une surface spécifique BET de 11 m²/g. Encore plus particulièrement il comprend du Al₂O₃ (par exemple 35,4%), du SiO₂ (par exemple 49,1%), du K₂O (par exemple 2,1%), du Fe₂O₃ (par exemple 0,85%), du MgO (par exemple 0,28%), du TiO₂ (par exemple 0,1%), du Na₂O (par exemple 0,04%) et/ou du CaO (par exemple 0,05%). Dans un mode de réalisation avantageux, la teneur en charge d) de la craie selon l'invention est comprise entre 5 et 40 % en poids, avantageusement entre 10 et 20 % en poids, en particulier entre 14 et 17 % en poids, par rapport au poids total de la craie.

La composition de la craie de coloriage à base de cire selon la présente invention comprend enfin un pigment e) pour apporter de la couleur à la craie et au marquage réalisé avec ladite craie.

Il s'agit de pigments bien connus par l'homme du métier selon la couleur désirée tel que par exemple des pigments minéraux comme l'oxyde de fer rouge, le dioxyde de titane, l'ultramarine et/ou le noir de carbone, et/ou des pigments organiques tels que le Phthalocyanine blue (BLUE 15 :1, 15 :3), le YELLOW 14, le LAKE RED, l'Orange 64, le Purple 23 et/ou le Green 7 etc.. Dans un mode de réalisation avantageux, la teneur en pigment e) de la craie selon l'invention est comprise entre 2 et 10 % en poids, avantageusement entre 2,5 et 5 % en poids, par rapport au poids total de la craie.

La composition de la craie de coloriage à base de cire selon la présente invention peut comprendre un additif f) pour apporter des propriétés complémentaires à la craie. Il peut s'agir par exemple d'un plastifiant, tel qu'un phtalate, un époxy ou une huile, d'un parfum, d'un arome, d'un ingrédient scintillant ou brillant (par exemple absorbant ou réfléchissant la lumière), d'un conservateur, d'un stabilisant, d'un dispersant, d'un anti-mousse. Cet additif peut par exemple être une oléfine alpha branchée.

Dans un mode de réalisation avantageux, la teneur en additif e) dans la craie selon la présente invention est comprise entre 0 et 6 % en poids par rapport au poids total de la craie. Si un additif e) est présent, avantageusement sa teneur est comprise entre 1 et 6 % en poids par rapport au poids total de la craie.

Avantageusement, la craie selon la présente invention ne comprend pas d'ester d'acide gras de sorbitane éthoxylé ni de polyéthylène glycol.

La craie de coloriage à base de cire selon la présente invention peut être utilisée pour le marquage, l'écriture ou le dessin par des adultes ou des enfants sur une surface poreuse, telle que du papier, du bois ou du carton, mais aussi sur une surface non poreuse, en particulier lisse, tel que par exemple un tableau d'écriture blanc de type VELLEDA®, une surface plastique (lisse de préférence), une surface métallique ou même éventuellement du verre. Dans le cas des surfaces non poreuses, le marquage est en général temporaire car il est facilement effaçable.

La craie est fabriquée par des procédés bien connus de l'homme du métier pour la fabrication des craies de coloriage à base de cire. Il peut ainsi s'agir d'un procédé de coulage - moulage dans des empreintes (qui seront ensuite refroidies afin que les craies se solidifient et puissent être éjectées). Le procédé de fabrication peut ainsi comprendre l'étape de chauffage de la cire a) à une température supérieure à sa température de fusion (en général la température de fusion de la cire a) est vers 50-60°C, l'étape de chauffage étant donc réalisée à une température de 80°C minimum afin de garantir une fusion parfaite et une fluidité importante, facilitant le remplissage des empreintes du moule), l'ajout des autres composants de la composition (b), c) d), e) et éventuellement f)) dans la cire fondue et leur mélange, puis le coulage du mélange dans des moules (avantageusement dans des empreintes du moule) avant leur refroidissement et donc leur solidification.

Les craies de coloriage à base de cire obtenues présentent au moins l'une des caractéristiques suivantes, avantageusement l'ensemble des caractéristiques suivantes:
- un effet aquarelle (c'est-à-dire solubilisation de tout ou partie du liant, permettant un étalement du dépôt sur la surface poreuse et l'obtention d'un frottis dilué, « transparent » et non plus opaque) sur surface poreuse telle que le papier, par exemple à l'aide d'un pinceau ou même au doigt ;
- effaçable à sec sur une surface non poreuse, en particulier lisse, telle qu'un tableau d'écriture blanc type VELLEDA® (en particulier, il n'est pas besoin de beaucoup appuyer pour effacer la craie);
- effaçable à l'eau (par exemple avec un chiffon humide) sur une surface non poreuse, en particulier lisse, telle qu'un tableau d'écriture blanc type VELLEDA®;
- une bonne lavabilité sur les vêtements, en particulier à la machine à laver ;
- un nettoyage facile sur la peau, en particulier à l'eau froide sans savon. En outre la craie selon la présente invention ne présente pas d'odeur désagréable, et en particulier ne présente aucune odeur.

La présente invention sera mieux comprise à la lecture des exemples qui suivent qui sont donnés à titre indicatif non limitatif.

### Exemple 1 : Exemple de compositions de craie de coloriage à base de cire selon la présente invention

Les compositions exactes des craies de couleur verte selon la présente invention sont rassemblées dans le tableau 1 ci-dessous :

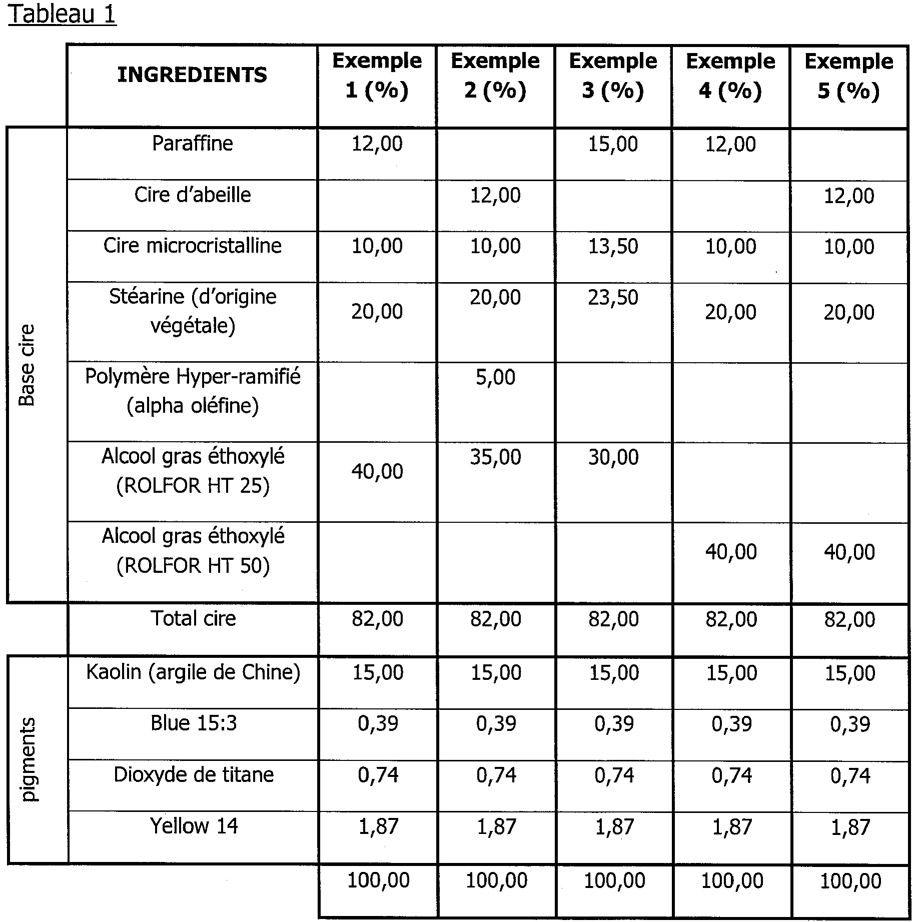

Des craies de couleur rouge, jaune, orange, cyclamen et bleu selon l'invention ont également été préparées sur la base de la composition de l'exemple 3 en changeant uniquement le type de pigments utilisés. Toutes les teintes sont atteignables en jouant sur le choix du ou des pigments en mélange.

Les craies obtenues présentent toutes les caractéristiques suivantes :
- effet aquarelle sur du papier à l'aide d'un pinceau;
- effaçables à sec sur un tableau d'écriture blanc type VELLEDA®;
- effaçables avec un chiffon humide sur un tableau d'écriture blanc type VELLEDA®;
- bonne lavabilité sur les vêtements à la machine à laver ;
- nettoyage facile sur la peau à l'eau froide sans savon.

### Exemple 2 : Exemple comparatif de compositions de craie de coloriage à base de cire

La composition exacte d'une craie de couleur verte utilisant de l'acide stéarique éthoxylé à la place d'un alcool gras éthoxylé est rassemblée dans le tableau 2 ci-dessous :

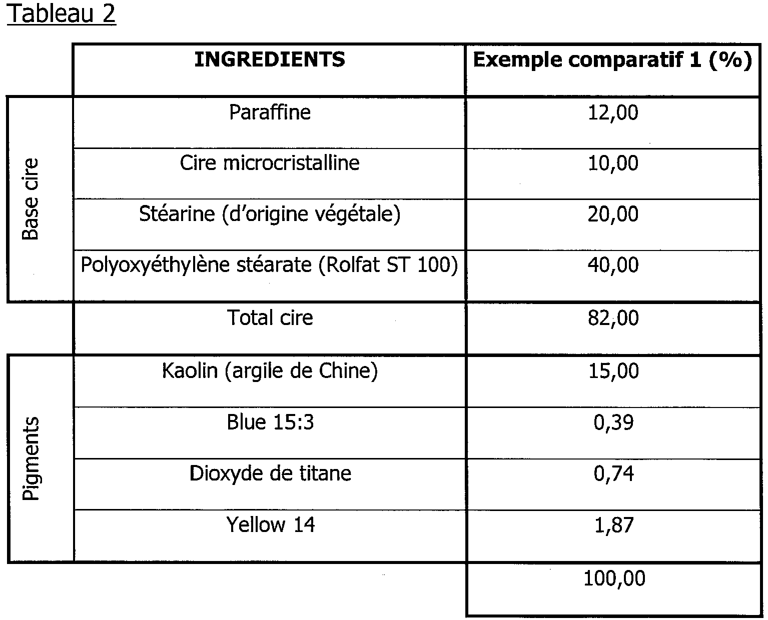

La craie obtenue n'est pas effaçable à sec sur surface non poreuse tel qu'un tableau blanc type VELLEDA® et présente un moins bon effet aquarelle sur papier. En outre, au niveau procédé de fabrication, le mélange obtenu coule difficilement dans le moule car il est visqueux et peu glissant.

Ainsi donc, seuls les alcools gras ethoxylés permettent de donner aux craies selon l'invention tous les avantages à la fois sur surface poreuse et non poreuse.

## Revendications

1. Craie de coloriage à base de cire pour surface poreuse et non poreuse comprenant :
a- au moins une cire,
b- un alcool gras éthoxylé,
c- de la stéarine,
d- une charge,
e- au moins un pigment et
f- éventuellement un additif.

2. Craie de coloriage selon la revendication 1, **caractérisée en ce que** la cire a) est choisi parmi la paraffine, la cire microcristalline, la cire d'abeille, la cire de polyéthylène, le pentaérythritol stéarate et leurs mélanges, avantageusement parmi la paraffine, la cire microcristalline, la cire d'abeille et leurs mélanges, encore plus avantageusement parmi un mélange de paraffine et de cire microcristalline et un mélange de cire d'abeille et de cire microcristalline.

3. Craie de coloriage selon l'une quelconque des revendications 1 ou 2, **caractérisée en ce que** sa teneur en cire a) est comprise entre 5 et 75 % en poids, avantageusement entre 10 et 50 % en poids, encore plus avantageusement entre 15 et 35 % en poids, par rapport au poids total de la craie.

4. Craie de coloriage selon l'une quelconque des revendications 1 à 3, **caractérisée en ce que** l'alcool gras éthoxylé b) est choisi parmi les alcools cétyliques éthoxylés, les alcools stéaryliques éthoxylés, les alcools cétylique et stéarylique éthoxylés et leurs mélanges, avantageusement il s'agit d'un alcool cétylique et stéarylique éthoxylé de formule I suivante :
CHᵣ(CH₂)ₘ-(O-CHᵣCH₂)ₙ-OH
dans laquelle m = 15 ou 17 et n représente un nombre entier compris entre 2 et 100, avantageusement entre 24 et 51.

5. Craie de coloriage selon l'une quelconque des revendications 1 à 4, **caractérisée en ce que** sa teneur en alcool gras éthoxylé b) est comprise entre 20 et 70 % en poids, avantageusement entre 25 et 50 % en poids, encore plus avantageusement entre 25 et 45 % en poids, par rapport au poids total de la craie.

6. Craie de coloriage selon l'une quelconque des revendications 1 à 5, **caractérisée en ce que** sa teneur en stéarine c) est comprise entre 10 et 40 % en poids, avantageusement entre 15 et 30 % en poids, encore plus avantageusement entre 17 et 25 % en poids, par rapport au poids total de la craie.

7. Craie de coloriage selon l'une quelconque des revendications 1 à 6, **caractérisée en ce que** la charge d) est choisie dans le groupe constitué par une argile, du kaolin, de la Montmorillonite, de la bentonite, de la silice, du mica, du talc, du carbonate de calcium, du silicate de magnésium, du silicate d'aluminium et leurs mélanges avantageusement il s'agit du kaolin.

8. Craie de coloriage selon l'une quelconque des revendications 1 à 7, **caractérisée en ce que** sa teneur en charge d) est comprise entre 5 et 40 % en poids, avantageusement entre 10 et 20 % en poids, en particulier entre 14 et 17 % en poids, par rapport au poids total de la craie.

9. Craie de coloriage selon l'une quelconque des revendications 1 à 8, **caractérisée en ce que** sa teneur en pigment e) est comprise entre 2 et 10 % en poids, avantageusement entre 2,5 et 5 % en poids, par rapport au poids total de la craie.

10. Craie de coloriage selon l'une quelconque des revendications 1 à 9, **caractérisée en ce que** sa teneur en additif f) est comprise entre 0 et 6 % en poids par rapport au poids total de la craie, avantageusement au moins un additif f) est présent en une teneur comprise entre 1 et 6 % en poids par rapport au poids total de la craie.

## Patentansprüche

1. Farbkreide auf Wachsbasis für poröse und nicht poröse Oberflächen, umfassend:
a- mindestens ein Wachs,
b- einen ethoxylierten Fettalkohol,
c- Stearin,
d- einen Füllstoff,
e- mindestens ein Pigment und
f- möglicherweise einen Zusatzstoff.

2. Farbkreide nach Anspruch 1, **dadurch gekennzeichnet, dass** das Wachs a) ausgewählt ist aus Paraffin, mikrokristallinem Wachs, Bienenwachs, Polyethylenwachs, Pentaerythritolstearat und Mischungen davon, vorzugsweise aus Paraffin, mikrokristallinem Wachs, Bienenwachs und Mischungen davon, stärker bevorzugt aus einer Mischung aus Paraffin und mikrokristallinem Wachs und einer Mischung aus Bienenwachs und mikrokristallinem Wachs.

3. Farbkreide nach einem der Ansprüche 1 oder 2, **dadurch gekennzeichnet, dass** ihr Wachsgehalt a) zwischen 5 und 75 Gew.-%, vorzugsweise zwischen 10 und 50 Gew.-%, stärker bevorzugt zwischen 15 und 35 Gew.-%, bezogen auf das Gesamtgewicht der Kreide, beträgt.

4. Farbkreide nach einem der Ansprüche 1 bis 3, **dadurch gekennzeichnet, dass** der ethoxylierte Fettalkohol b) ausgewählt ist aus ethoxylierten Cetylalkoholen, ethoxylierten Stearylalkoholen, ethoxylierten Cetyl- und Stearylalkoholen und Mischungen davon, vorzugsweise ein ethoxylierter Cetyl- und Stearylalkohol der folgenden Formel I:
CH₃-(CH₂)ₘ-(O-CH₂-CH₂)ₙOH,
wobei m = 15 oder 17 und n für eine ganze Zahl zwischen 2 und 100, vorzugsweise zwischen 24 und 51, steht.

5. Farbkreide nach einem der Ansprüche 1 bis 4, **dadurch gekennzeichnet, dass** ihr Gehalt an ethoxyliertem Fettalkohol b) zwischen 20 und 70 Gew.-%, vorzugsweise zwischen 25 und 50 Gew.-%, noch vorteilhafter zwischen 25 und 45 Gew.-%, bezogen auf das Gesamtgewicht der Kreide, beträgt.

6. Farbkreide nach einem der Ansprüche 1 bis 5, **dadurch gekennzeichnet, dass** ihr Stearingehalt c) zwischen 10 und 40 Gew.-%, vorzugsweise zwischen 15 und 30 Gew.-%, noch vorteilhafter zwischen 17 und 25 Gew.-%, bezogen auf das Gesamtgewicht der Kreide, beträgt.

7. Farbkreide nach einem der Ansprüche 1 bis 6, **dadurch gekennzeichnet, dass** der Füllstoff d) ausgewählt ist aus der Gruppe bestehend aus Ton, Kaolin, Montmorillonit, Bentonit, Siliciumdioxid, Glimmer, Talkum, Calciumcarbonat, Magnesiumsilikat, Aluminiumsilikat und Mischungen davon, vorzugsweise Kaolin.

8. Farbkreide nach einem der Ansprüche 1 bis 7, **dadurch gekennzeichnet, dass** ihr Füllstoffgehalt d) zwischen 5 und 40 Gew.-%, vorzugsweise zwischen 10 und 20 Gew.-%, insbesondere zwischen 14 und 17 Gew.-%, bezogen auf das Gesamtgewicht der Kreide, beträgt.

9. Farbkreide nach einem der Ansprüche 1 bis 8, **dadurch gekennzeichnet, dass** ihr Pigmentgehalt e) zwischen 2 und 10 Gew.-%, vorzugsweise zwischen 2,5 und 5 Gew.-%, bezogen auf das Gesamtgewicht der Kreide, beträgt.

10. Farbkreide nach einem der Ansprüche 1 bis 9, **dadurch gekennzeichnet, dass** ihr Gehalt an Zusatzstoff f) zwischen 0 und 6 Gew.-%, bezogen auf das Gesamtgewicht der Kreide, beträgt, wobei vorzugsweise mindestens ein Zusatzstoff f) in einem Gehalt zwischen 1 und 6 Gew.-%, bezogen auf das Gesamtgewicht der Kreide, vorhanden ist.

## Claims

1. Wax-based coloring crayon for porous and non-porous surfaces, the crayon comprising:
a- at least one wax,
b- an ethoxylated fatty alcohol,
c- stearin,
d- a filler,
e- at least one pigment and
f- optionally an additive.

2. Coloring crayon according to claim 1, **characterized in that** the wax a) is selected from paraffin, microcrystalline wax, beeswax, polyethylene wax, pentaerythritol stearate and mixtures thereof, advantageously from paraffin, microcrystalline wax, beeswax and mixtures thereof, even more advantageously from a mixture of paraffin and microcrystalline wax and a mixture of beeswax and microcrystalline wax.

3. Coloring crayon according to either claim 1 or claim 2, **characterized in that** its content of wax a) is between 5 and 75 wt.%, advantageously between 10 and 50 wt.%, even more advantageously between 15 and 35 wt.%, relative to the total weight of the crayon.

4. Coloring crayon according to any of claims 1 to 3, **characterized in that** the ethoxylated fatty alcohol b) is selected from ethoxylated cetyl alcohols, ethoxylated stearyl alcohols, ethoxylated cetyl and stearyl alcohols and mixtures thereof, advantageously an ethoxylated cetyl and stearyl alcohol of the following formula I:
CH₃-(CH₂)ₘ-(O-CH₂-CH₂ₖOH
where m = 15 or 17 and n represents an integer between 2 and 100, advantageously between 24 and 51.

5. Coloring crayon according to any of claims 1 to 4, **characterized in that** its content of ethoxylated fatty alcohol b) is between 20 and 70 wt.%, advantageously between 25 and 50 wt.%, even more advantageously between 25 and 45 wt.%, relative to the total weight of the crayon.

6. Coloring crayon according to any of claims 1 to 5, **characterized in that** its content of stearin c) is between 10 and 40 wt.%, advantageously between 15 and 30 wt.%, even more advantageously between 17 and 25 wt.%, relative to the total weight of the crayon.

7. Coloring crayon according to any of claims 1 to 6, **characterized in that** the filler d) is selected from the group consisting of a clay, kaolin, montmorillonite, bentonite, silica, mica, talc, calcium carbonate, magnesium silicate, aluminum silicate and mixtures thereof, advantageously kaolin.

8. Coloring crayon according to any of claims 1 to 7, **characterized in that** its content of filler d) is between 5 and 40 wt.%, advantageously between 10 and 20 wt.%, in particular between 14 and 17 wt.%, relative to the total weight of the crayon.

9. Coloring crayon according to any of claims 1 to 8, **characterized in that** its content of pigment e) is between 2 and 10 wt.%, advantageously between 2.5 and 5 wt.%, relative to the total weight of the crayon.

10. Coloring crayon according to any of claims 1 to 9, **characterized in that** its content of additive f) is between 0 and 6 wt.%, relative to the total weight of the crayon, advantageously at least one additive f) is present in a content of between 1 and 6 wt.%, relative to the total weight of the crayon.
